# FASCICULE DE BREVET EUROPEEN

(11) **EP 3 585 654 B1**
(45) Date de publication et mention de la délivrance du brevet: **07.04.2021**
(21) Numéro de dépôt: 18709678.9
(22) Date de dépôt: 20.02.2018
(51) Int. Cl.: B60R 13/08

(54) **ECRAN DE PROTECTION ACOUSTIQUE POUR UN MOTEUR DE VEHICULE AUTOMOBILE**
AKUSTISCHE ABSCHIRMUNG FÜR EINEN KRAFTFAHRZEUGMOTOR
ACOUSTIC SHIELD FOR A MOTOR VEHICLE ENGINE

(30) Priorité: 24.02.2017 FR 1751516; 03.04.2017 FR 1752852
(43) Date de publication de la demande: 01.01.2020
(73) Titulaire: TREVES Products, Services & Innovation, 75008 Paris (FR)
(72) Inventeur: WAXIN, Laurent, 51100 Reims (FR); CAPRON, Christophe, 51100 Reims (FR); CHOQUART, François, 51100 Reims (FR)
(74) Mandataire: Sayettat, Julien Christian
(86) Numéro de dépôt international: PCT/FR2018/050402
(87) Numéro de publication internationale: WO 2018/154230

(56) Documents cités:
- EP-A1- 1 671 847
- EP-A1- 1 772 604
- DE-A1- 19 652 527
- DE-A1-102008 030 709
- US-A1- 2006 124 387

## Description

L'invention concerne un écran de protection acoustique pour moteur de véhicule automobile.

Il est connu, notamment des documents FR 2923069 A1 et DE 19652527A1, de réaliser un écran de protection acoustique pour moteur de véhicule automobile, ledit écran comprenant :
- une coque thermo-comprimée à base de fibres liées entre elles par un liant thermoplastique, de manière à former une coque poreuse pourvue de propriétés d'absorption acoustique, ladite coque comprenant une face interne et une face externe,
- une feuille métallique de protection thermique vis-à-vis dudit moteur, ladite feuille recouvrant tout ou partie de ladite face interne.

Un tel écran présente l'avantage de la légèreté, contrairement à des écrans dont la coque est à base de matériau plastique moulé par injection, et aussi de posséder des propriétés d'absorption acoustique sans requérir l'ajout d'une couche absorbante, du fait de la porosité intrinsèque de ladite coque. Cependant, de par la nature poreuse de la coque, il est sujet aux reprises de fluides.

En outre, la fixation de la feuille métallique est malaisée, ceci de par la création de ponts thermiques au niveau des fixations de ladite feuille sur la coque, la présence de tels ponts risquant d'aboutir à une dégradation de la coque.

Par ailleurs, dans un cas particulier où la coque présente au moins une découpe formant une ouverture d'extraction de la chaleur, la tranche de la coque en périphérie de ladite ouverture n'est pas protégée contre la chaleur, d'où un risque supplémentaire de dégradation de ladite coque.

De plus, en cas de passage à gué, une telle ouverture crée un risque que l'eau s'engouffre entre la feuille et la coque, ce qui peut entrainer une déchirure ou un arrachement de ladite feuille.

L'invention a pour but de pallier ces inconvénients.

A cet effet, l'invention propose un écran de protection acoustique pour moteur de véhicule automobile, ledit écran comprenant :
- une coque thermo-comprimée à base de fibres liées entre elles par un liant thermoplastique, de manière à former une coque poreuse pourvue de propriétés d'absorption acoustique, ladite coque comprenant une face interne et une face externe,
- une feuille métallique de protection thermique vis-à-vis dudit moteur, ladite feuille recouvrant tout ou partie de ladite face interne,
ladite feuille étant fixée de façon sensiblement étanche, essentiellement par sa périphérie, à ladite coque, de manière à réaliser une étanchéité périphérique et à préserver hors périphérie une lame d'air entre ladite feuille et ladite coque, afin de protéger ladite coque de la chaleur accumulée par ladite feuille.

On verra par la suite que la feuille peut être lisse ou bosselée.

Dans le cas d'une feuille lisse, la demanderesse a observé, de façon surprenante, que la lame d'air, malgré son épaisseur pouvant être très fine - notamment inférieure à 1 mm -, permet de réaliser une protection très efficace de la coque contre la chaleur accumulée par la feuille métallique.

Par ailleurs, on dispose, du fait du caractère lisse de la feuille métallique, d'un écran d'épaisseur minimisée, ce qui permet de l'adapter à des architectures de véhicules n'offrant qu'une faible place pour recevoir ledit écran.

On peut aussi prévoir, comme décrit plus loin, que la feuille soit bosselée, ceci afin de permettre la création d'une lame d'air d'épaisseur accentuée.

Avec un tel agencement, le contact entre la feuille et la coque se fait uniquement en extrémité des bossages, en particulier de manière sensiblement ponctuelle quand les bossages présentent une forme générale de dôme, ce qui permet de minimiser les ponts thermiques.

Il en résulte une surface de contact très faible entre la feuille et la coque, ce qui permet d'éviter la dégradation de cette dernière par la chaleur emmagasinée par la feuille.

Et dans tous les cas :
- le fait que la feuille soit fixée par sa périphérie de façon sensiblement étanche à la coque permet d'empêcher une pénétration des fluides entre la feuille et la coque,
- par ailleurs, il est loisible au concepteur du véhicule de faire en sorte que la périphérie de la feuille corresponde à une zone de la coque peu exposée à la chaleur, ce qui permet une fixation robuste de par son emplacement en zone froide de ladite coque,
- enfin, dans la situation particulière où la coque présente au moins une découpe formant une ouverture d'extraction de la chaleur, on verra par la suite que l'invention permet que la tranche de la coque en périphérie de ladite ouverture soit protégée contre la chaleur, et aussi que, en cas de passage à gué, l'eau ne s'engouffre pas entre la feuille et ladite coque au niveau de ladite ouverture, ce qui évite le risque de déchirure ou d'arrachement de la feuille.

D'autres particularités et avantages de l'invention apparaîtront dans la description qui suit, faite en référence aux figures jointes, dans lesquelles :
- la figure 1 est une vue schématique partielle de face, du côté de la face externe, d'un écran selon une réalisation,
- la figure 2 est une vue schématique en coupe partielle de l'écran de la figure 1 selon un premier mode de réalisation,
- la figure 3 est une vue schématique en coupe partielle de l'écran de la figure 1 selon un deuxième mode de réalisation.

On décrit à présent, en références aux figures, un écran 1 de protection acoustique pour moteur de véhicule automobile - ledit écran étant notamment destiné à être monté sous le moteur dudit véhicule -, ledit écran comprenant :
- une coque 2 thermo-comprimée à base de fibres liées entre elles par un liant thermoplastique, de manière à former une coque poreuse pourvue de propriétés d'absorption acoustique, ladite coque comprenant une face interne 3 et une face externe 4,
- une feuille 5 métallique de protection thermique vis-à-vis dudit moteur, ladite feuille recouvrant tout ou partie de ladite face interne,
ladite feuille étant fixée de façon sensiblement étanche, essentiellement par sa périphérie 6, à ladite coque, de manière à réaliser une étanchéité périphérique et à préserver hors périphérie une lame d'air 8 entre ladite feuille et ladite coque, afin de protéger ladite coque de la chaleur accumulée par ladite feuille.

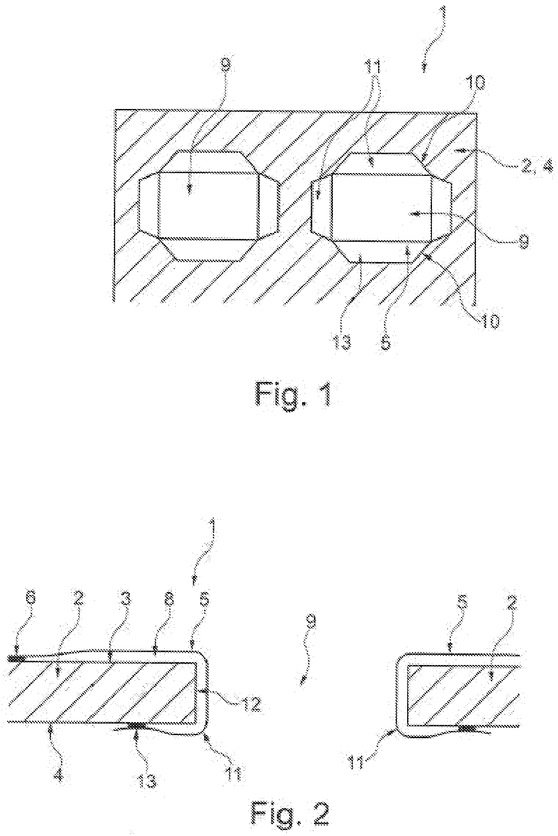

Selon le mode de réalisation de la figure 2, la feuille 5 est lisse.

On rappelle ici que, dans ce cas, la lame d'air 8 permet, malgré son épaisseur pouvant être très fine, de réaliser une protection très efficace de la coque 2 contre la chaleur accumulée par la feuille 3 métallique.

Dans ce cas, la lame d'air 8 peut notamment présenter généralement une épaisseur inférieure à 1 mm.

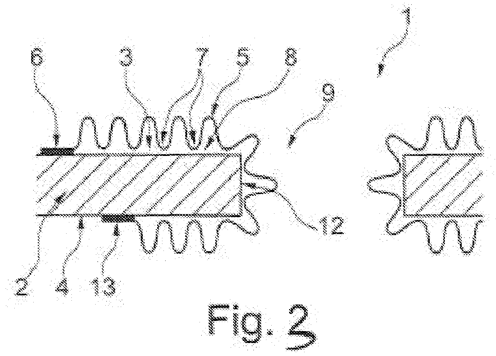

Selon le mode de réalisation de la figure 3, permettant de réaliser une lame d'air 8 d'épaisseur accentuée, la feuille 5 présente une pluralité de bossages 7 permettant de la maintenir généralement écartée de la face interne 3, de manière à créer ladite lame d'air.

En particulier, les bossages 7 peuvent être disposés en réseau régulier, notamment selon un pas compris entre 3 et 6 mm, de sorte que la feuille 5 soit gaufrée.

De façon non représentée, en particulier quand la feuille 5 est lisse, il peut être prévu que la coque 2 présente au moins une zone pourvue d'une nervure d'écartement de la feuille 5, ladite nervure étant issue de la face interne 3, de manière à réaliser une lame d'air 8 d'épaisseur accentuée dans ladite zone.

L'écran 1 représenté sur les figures dans ses différents modes de réalisation présente en outre les caractéristiques suivantes :
- la coque 2 présente au moins une découpe - ici en forme de rectangle - formant une ouverture 9 d'extraction de la chaleur,
- la feuille 5 est pourvue d'une pluralité d'incisions 10 définissant des pans 11, lesdits pans étant repliés à travers ladite ouverture sur la face externe 4 de manière à recouvrir la tranche 12 de la coque 2 en périphérie de ladite ouverture, de sorte que la lame d'air 8 s'étende également sur ladite tranche pour la protéger contre la chaleur,
- lesdits pans sont fixés sur ladite face externe de manière sensiblement étanche.

Selon les modes de réalisation représentés, les pans 11 sont fixés à la face externe 4 par leur périphérie 13.

Un tel agencement permet la création d'une couche d'air 8 entre la feuille 5 et la tranche 12 de la coque 2 en périphérie d'une ouverture 9.

La fixation se faisant dans ce cas sur la face externe 4, elle n'est pas en regard de la source de chaleur, ce qui permet d'optimiser sa robustesse, notamment lorsque la fixation est faite par soudure.

Selon une réalisation, les fibres de la coque 2 sont à base de verre, le liant étant à base de polypropylène.

En particulier, la coque 2 comprend entre 40 et 60 % en poids de fibres de verre.

Selon une réalisation, la feuille 5 présente une épaisseur comprise entre 50 et 150 microns.

Selon une réalisation, la feuille 5 est pourvue d'un réseau de micro-perforations, ladite feuille comprenant notamment entre 200.000 et 600.000 micro-perforations/m², ce qui permet à la coque 2 de jouer pleinement son rôle d'absorbant des ondes acoustiques passant à travers lesdites micro-perforations.

En particulier, les micro-perforations sont réalisées de sorte que la feuille 5 soit sensiblement étanche aux fluides tels que l'eau ou l'huile dans les conditions usuelles d'utilisation d'un véhicule.

Les micro-perforations peuvent par exemple être circulaires et présenter un diamètre compris entre 100 et 300 microns.

De façon non représentée, la coque 2 peut présenter au moins une zone faiblement comprimée, destinée à réaliser une absorption acoustique, et au moins une zone fortement comprimée, destinée à réaliser un renfort.

En particulier, la coque 2 peut présenter en zone faiblement comprimée une résistance au passage de l'air comprise entre 250 et 2500 N.s.m⁻³, ladite résistance au passage de l'air étant mesurée selon la norme ISO 9053/ méthode B, avec écoulement d'air alternatif.

Selon une réalisation, la feuille 5 est fixée en sa périphérie 6, et le cas échéant au niveau des pans 11, par soudure à la coque 2.

On peut notamment prévoir que la feuille 5 soit pourvue d'une enduction d'envers en matériau thermoplastique ou thermodurcissable pour favoriser la soudure. Selon une réalisation non représentée, l'écran 1 peut comprendre en outre une couche de protection, notamment à base de non tissé, fixée en face externe 4 de la coque 2.

Une telle couche protège, dans une certaine mesure, contre la reprise d'eau par la face externe 4 de la coque 2, et permet aussi de masquer des pans 11 éventuels.

De façon non représentée, il peut être en outre prévu d'interposer entre la couche de protection et la face externe 4 un film étanche permettant une parfaite protection contre les reprises d'eau.

## Revendications

1. Ecran (1) de protection acoustique pour moteur de véhicule automobile, ledit écran comprenant :
• une coque (2) thermo-comprimée à base de fibres liées entre elles par un liant thermoplastique, de manière à former une coque poreuse pourvue de propriétés d'absorption acoustique, ladite coque comprenant une face interne (3) et une face externe (4),
• une feuille (5) métallique de protection thermique vis-à-vis dudit moteur, ladite feuille recouvrant tout ou partie de ladite face interne,
ladite feuille étant fixée de façon sensiblement étanche, essentiellement par sa périphérie (6), à ladite coque, de manière à réaliser une étanchéité périphérique et à préserver hors périphérie une lame d'air (8) entre ladite feuille et ladite coque, afin de protéger ladite coque de la chaleur accumulée par ladite feuille, ledit écran étant **caractérisé en ce que** la feuille (5) présente une pluralité de bossages (7) permettant de la maintenir généralement écartée de la face interne (3), de manière à créer une lame d'air (8) d'épaisseur accentuée, les bossages (7) étant disposés en réseau régulier, notamment selon un pas compris entre 3 et 6 mm, de sorte que la feuille (5) soit gaufrée.

2. Ecran selon la revendication 1, **caractérisé en ce que** la coque (2) présente au moins une zone pourvue d'une nervure d'écartement de la feuille (5), ladite nervure étant issue de la face interne (3), de manière à réaliser une lame d'air (8) d'épaisseur accentuée dans ladite zone.

3. Ecran selon l'une des revendications 1 ou 2, **caractérisé en ce que** :
• la coque (2) présente au moins une découpe formant une ouverture (9) d'extraction de la chaleur,
• la feuille (5) est pourvue d'une pluralité d'incisions (10) définissant des pans (11), lesdits pans étant repliés à travers ladite ouverture sur la face externe (4) de manière à recouvrir la tranche (12) de la coque (2) en périphérie de ladite ouverture, de sorte que la lame d'air (8) s'étende également sur ladite tranche pour la protéger contre la chaleur,
• lesdits pans sont fixés sur ladite face externe de manière sensiblement étanche.

4. Ecran selon l'une quelconque des revendications 1 à 3, **caractérisé en ce que** la feuille (5) présente une épaisseur comprise entre 50 et 150 microns.

5. Ecran selon l'une quelconque des revendications1 à 4, **caractérisé en ce que** la feuille (5) est pourvue d'un réseau de micro-perforations, ladite feuille comprenant notamment entre 200.000 et 600.000 micro-perforations/m².

6. Ecran selon l'une quelconque des revendications 1 à 5, **caractérisé en ce que** la feuille (5) est fixée en sa périphérie (6), et le cas échéant au niveau des pans (11), par soudure à la coque (2).

## Patentansprüche

1. Akustische Abschirmung (1) für einen Kraftfahrzeugmotor, wobei die Abschirmung umfasst:
• eine thermokomprimierte Schale (2) auf Basis von Fasern, die durch ein thermoplastisches Bindemittel miteinander verbunden sind, um eine poröse Schale zu bilden, die mit akustischen Absorptionseigenschaften versehen ist, wobei die Schale eine Innenseite (3) und eine Außenseite (4) umfasst,
• eine metallische Wärmeschutzfolie (5) gegenüber dem Motor, wobei die Folie die gesamte Innenseite oder einen Teil davon abdeckt,
wobei die Folie in im Wesentlichen dichter Form, weitestgehend durch ihren Umfang (6) an der Schale befestigt ist, um eine umfängliche Abdichtung zu vollziehen, und um außerhalb des Umfangs einen Luftzwischenraum (8) zwischen der Folie und der Schale zu erhalten, um die Schale vor der durch die Folie aufgestauten Hitze zu schützen, wobei die Abschirmung **dadurch gekennzeichnet ist, dass** die Folie (5) eine Vielzahl von Buckeln (7) aufweist, die es ermöglichen, sie im Allgemeinen von der Innenseite (3) entfernt zu halten, um einen Luftzwischenraum (8) von betonter Dicke zu kreieren, wobei die Buckel (7) in einem regelmäßigen Raster, insbesondere in einem Schrittabstand angeordnet sind, der zwischen 3 und 6 mm enthalten ist, damit die Folie (5) geprägt ist.

2. Abschirmung nach Anspruch 1, **dadurch gekennzeichnet, dass** die Schale (2) mindestens eine Zone aufweist, die mit einer Abstandsrippe für die Folie (5) versehen ist, wobei die Rippe aus der Innenseite (3) stammt, um einen Luftzwischenraum (8) von betonter Dicke in der Zone zu vollziehen.

3. Abschirmung nach einem der Ansprüche 1 oder 2, **dadurch gekennzeichnet, dass**:
• die Schale (2) mindestens einen Ausschnitt aufweist, der eine Öffnung (9) zum Extrahieren der Hitze bildet,
• die Folie (5) mit einer Vielzahl von Einschnitten (10) versehen ist, die Teile (11) definieren, wobei die Teile durch die Öffnung hindurch an die Außenseite (4) gefaltet werden, um den Rand (12) der Schale (2) am Umfang der Öffnung abzudecken, sodass sich der Luftzwischenraum (8) auch auf den Rand erstreckt, um ihn gegen die Hitze zu schützen,
• die Teile an der Außenseite in im Wesentlichen dichter Form befestigt sind.

4. Abschirmung nach einem der Ansprüche 1 bis 3, **dadurch gekennzeichnet, dass** die Folie (5) eine Dicke aufweist, die zwischen 50 und 150 Mikrometern enthalten ist.

5. Abschirmung nach einem der Ansprüche 1 bis 4, **dadurch gekennzeichnet, dass** die Folie (5) mit einem Raster an Mikroperforationen versehen ist, wobei die Folie insbesondere zwischen 200.000 und 600.000 Mikroperforationen/m² umfasst.

6. Abschirmung nach einem der Ansprüche 1 bis 5, **dadurch gekennzeichnet, dass** die Folie (5) an ihrem Umfang (6), und gegebenenfalls im Bereich der Teile (11) durch Anschweißen an die Schale (2) befestigt ist.

## Claims

1. Acoustic shield (1) for a motor vehicle engine, said shield comprising:
- a thermo-compressed shell (2) based on fibres bound together by a thermoplastic binder so as to form a porous shell that has noise absorption properties, said shell comprising an internal face (3) and an external face (4),
- a sheet (5) of metal for thermal protection against said engine, said sheet covering all or part of said internal face, said sheet being attached in a substantially fluidtight manner, essentially via its periphery (6), to said shell, so as to create a peripheral seal and maintain, except at the periphery, an air gap (8) between said sheet and said shell, so as to protect said shell from the heat accumulated by said sheet, said shield being **characterized in that** the sheet (5) has a plurality of bumps (7) enabling it to be held generally apart from the internal face (3), so as to create an air gap (8) having an accentuated thickness, the bumps (7) being arranged in a regular array, in particular according to a pitch of between 3 and 6 mm, so that the sheet (5) is goffered.

2. Shield according to claim 1, **characterized in that** the shell (2) has at least one area provided with a rib for spacing from the sheet (5), said rib originating from the internal face (3), so as to form an air gap (8) having an accentuated thickness in said area.

3. Shield according to one of claims 1 or 2, **characterized in that**:
- the shell (2) has at least one cutout forming an opening (9) for heat extraction,
- the sheet (5) has a plurality of incisions (10) defining sections (11), said sections being folded through said opening onto the external face (4) in order to cover the edge (12) of the shell (2) at the periphery of said opening, so that the air gap (8) also extends over said edge in order to protect it from heat,
- said sections are attached to said external face in a substantially fluidtight manner.

4. Shield according to any one of claims 1 to 3, **characterized in that** the sheet (5) has a thickness of between 50 and 150 microns.

5. Shield according to any one of claims 1 to 4, **characterized in that** the sheet (5) is provided with an array of micro-perforations, said sheet having in particular between 200,000 and 600,000 micro-perforations/m².

6. Shield according to any one of claims 1 to 5, **characterized in that** the sheet (5) is attached at its periphery (6), and, as the case may be, at the sections (11), by welding to the shell (2).
